(19) Europäisches Patentamt
European Patent Office
Office européen des brevets

(11) **EP 4 717 515 A1**

(12) **EUROPEAN PATENT APPLICATION**

(43) Date of publication:
01.04.2026 Bulletin 2026/14

(21) Application number: 25201092.1

(22) Date of filing: 09.09.2025

(51) International Patent Classification (IPC):
**B60L 58/20** (2019.01)   **B60L 58/25** (2019.01)
**H02J 7/34** (2006.01)   **H02J 7/06** (2006.01)

(52) Cooperative Patent Classification (CPC):
**B60L 58/20; B60L 58/25; H02J 7/342;**
B60L 2210/10; H02J 7/06; H02J 7/485;
H02J 2207/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 30.09.2024 JP 2024170468

(71) Applicant: **Honda Motor Co., Ltd.**
**Toyko 105-8404 (JP)**

(72) Inventors:
• **KURODA, Gen**
**Tokyo 105-8404 (JP)**
• **NISHIMIYA, Ayumu**
**Tokyo 105-8404 (JP)**
• **KUWANO, Yuki**
**Tokyo 105-8404 (JP)**

(74) Representative: **Weickmann & Weickmann PartmbB**
**Postfach 860 820**
**81635 München (DE)**

(54) **CHARGING CONTROL SYSTEM**

(57) A charging control system (1) includes: a DC-DC converter (6) that is connected to a high-voltage battery (3), decreases the voltage of first electric power (Pbat) of the high-voltage battery (3), and supplies the electric power to a low-voltage battery (7); a battery charger (4) that is connected to the converter (6) and the high-voltage battery (3), and supplies second electric power (Pchg) obtained from an external electric power source to at least one of the converter (6) and the high-voltage battery (3); a current sensor (3a) that acquires a current value (Ibat) of the first electric power (Pbat) flowing from the high-voltage battery (3) to the converter (6); and a BMS (5) that inputs a signal of the current sensor (3a) and outputs a command value (PI) of the second electric power (Pchg) which is output from the battery charger (4) to the battery charger (4), wherein the BMS (5) outputs the command value (PI) of the second electric power (Pchg) based on the current value (Ibat).

**FIG. 1**

## Description

BACKGROUND

Field of the Invention

The present invention relates to a charging control system.

Background

In recent years, in order to ensure that more people have access to affordable, reliable, sustainable, and advanced energy, research and development relating to secondary batteries that contribute to energy efficiency has been conducted.

For example, in Japanese Patent No. 6535583, a technique is disclosed which aims at continuing electric power supply to a low-voltage battery in an electric power source device of an electric vehicle even when the temperature of an electric power converter is excessively increased. That is, a technique is disclosed which has, when electric power from an external battery charger is supplied to a low-voltage battery, a mode (first supply mode) of supplying electric power with the intermediary of a high-voltage battery and a mode (second supply mode) of supplying electric power without the intermediary of the high-voltage battery, and the supply mode is switched based on various temperatures.

SUMMARY

In the technique relating to secondary batteries, there is a possibility that when a lithium-ion battery used for the high-voltage battery is charged and discharged under a low-temperature environment such as a cold region, degradation of the battery is accelerated. Therefore, when the temperature of the high-voltage battery is low, it is desirable that the low-voltage battery is capable of being charged directly from a battery charger while performing outputting from the high-voltage battery as little as possible in order to prevent degradation of the high-voltage battery.

However, in a circuit of Japanese Patent No. 6535583, if the second supply mode is selected when the temperature of the high-voltage battery is low, the low-voltage battery can be charged from the battery charger as described above, but there is a problem that costs increase since it is necessary to provide a converter corresponding to each mode.

An aspect of the present invention aims at, in a charging control system including a battery charger, a high-voltage battery, and a low-voltage battery, preventing the increase of costs while making it possible to charge the low-voltage battery directly from the battery charger at the time of charging standby of the high-voltage battery. Further, the aspect of the present invention contributes to energy efficiency.

A charging control system (1) according to a first aspect of the present invention includes: a voltage converter (6) that is connected to a high-voltage battery (3), decreases the voltage of first electric power (Pbat) of the high-voltage battery (3), and supplies the electric power having a decreased voltage to a low-voltage battery (7); a battery charger (4) that is connected to the voltage converter (6) and the high-voltage battery (3), and supplies second electric power (Pchg) obtained from an external electric power source to at least one of the voltage converter (6) and the high-voltage battery (3); a current detection portion (3a) that acquires a current value (Ibat) of the first electric power (Pbat) flowing from the high-voltage battery (3) to the voltage converter (6); and a control portion (5) that inputs a signal of the current detection portion (3a) and outputs a command value (PI) of the second electric power (Pchg) which is output from the battery charger (4) to the battery charger (4), wherein the control portion (5) outputs the command value (PI) of the second electric power (Pchg) based on the current value (Ibat).

According to this configuration, the control portion that controls the output electric power of the battery charger outputs an electric power command value to the battery charger based on the current value of the output electric power flowing from the high-voltage battery to the voltage converter. The output electric power of the high-voltage battery is reduced by balancing the output electric power of the battery charger and an auxiliary machine consumption electric power. Accordingly, as compared with a configuration in which a converter is provided between the battery charger and the low-voltage battery and between the high-voltage battery and the low-voltage battery, the low-voltage battery can be charged by the output electric power of the battery charger without the intermediary of the high-voltage battery while preventing the increase of the number of converters.

A second aspect of the present invention is the charging control system (1) according to the first aspect described above, wherein the control portion (5) may output the command value (PI) of the second electric power (Pchg) of the battery charger (4) so that the current value (Ibat) of the first electric power (Pbat) flowing from the high-voltage battery (3) to the voltage converter (6) becomes zero.

According to this configuration, the control portion that controls the output electric power of the battery charger outputs the electric power command value to the battery charger so that the current value flowing from the high-voltage battery to the voltage converter becomes zero, and thereby, the low-voltage battery can be charged from the battery charger without the intermediary of the high-voltage battery while reducing the output electric power of the high-voltage battery to zero.

A third aspect of the present invention is the charging control system (1) according to the first or second aspect described above which may include: a temperature acquisition portion (3b) that acquires a temperature of the high-voltage battery (3), wherein the control portion (5) may output the command value (PI) of the second electric power (Pchg) based on the current value (Ibat) when the temperature of the high-voltage battery (3) acquired by the temperature acquisition portion (3b) becomes equal to or less than a threshold value.

According to this configuration, the control portion that controls the output electric power of the battery charger outputs the electric power command value to the battery charger based on the temperature of the high-voltage battery, and thereby, for example, when the temperature of the high-voltage battery is decreased (when the battery is at a low temperature), the output electric power of the high-voltage battery is reduced, and it becomes possible to charge the low-voltage battery by the output electric power of the battery charger. Therefore, it is possible to continue electric power supply to the low-voltage battery by the battery charger while preventing degradation of the high-voltage battery.

A fourth aspect of the present invention is the charging control system (1) according to the third aspect described above, wherein the control portion (5) may output the command value (PI) of the second electric power (Pchg) so that the second electric power (Pchg) output from the battery charger (4) is equal to electric power consumed by the voltage converter (6).

According to this configuration, the output electric power of the high-voltage battery can be made zero, and therefore, it is possible to charge the low-voltage battery from the battery charger without the intermediary of the high-voltage battery.

A fifth aspect of the present invention is the charging control system (1) according to the third aspect described above, wherein the control portion (5) may cause the current value (Ibat) of the first electric power (Pbat) to be zero by increasing a current value output from the battery charger (4).

According to this configuration, the output electric power of the high-voltage battery can be made zero by adjusting only the current value output from the battery charger.

According to the aspect of the present invention, in the charging control system including the battery charger, the high-voltage battery, and the low-voltage battery, it is possible to prevent the increase of costs while making it possible to charge the low-voltage battery directly from the battery charger at the time of charging standby of the high-voltage battery.

BRIEF DESCRIPTION OF THE DRAWINGS

FIG. 1 is a view of a configuration of a charging control system in an embodiment of the present invention.
FIG. 2 is a block diagram showing an image of calculation of a charging current command value in the charging control system.
FIG. 3 is a graph showing changes of parameters of the charging control system.
FIG. 4 is an explanatory view showing a flow of electric power when a lead battery is charged under a low-temperature environment in the charging control system of the embodiment.
FIG. 5 is a flowchart showing a process in a control portion when a charging control is performed by the charging control system.

DESCRIPTION OF THE REFERENCE NUMERALS

| 1 | Charging control system |
| 3 | High-voltage battery |
| 3a | Current sensor (current detection portion) |
| 3b | Temperature sensor (temperature acquisition portion) |
| 4 | Battery charger |
| 5 | BMS (control portion) |
| 6 | DC-DC converter (voltage converter) |
| 7 | Low-voltage battery |
| Ibat | Current value |
| Paux | Auxiliary machine consumption electric power |
| Pbat | Output electric power of high-voltage battery (first electric power) |
| Pchg | Output electric power of battery charger (second electric power) |
| PI | Charging current command value (command value) |

DESCRIPTION OF EMBODIMENTS

Hereinafter, an embodiment of the present invention will be described with reference to the drawings. The embodiment is described using an example of a charging control system 1 of an electric vehicle capable of charging a high-voltage battery 3 from an external electric power source. Hereinafter, the electric vehicle may be simply referred to as a "vehicle".

<Charging control system 1>

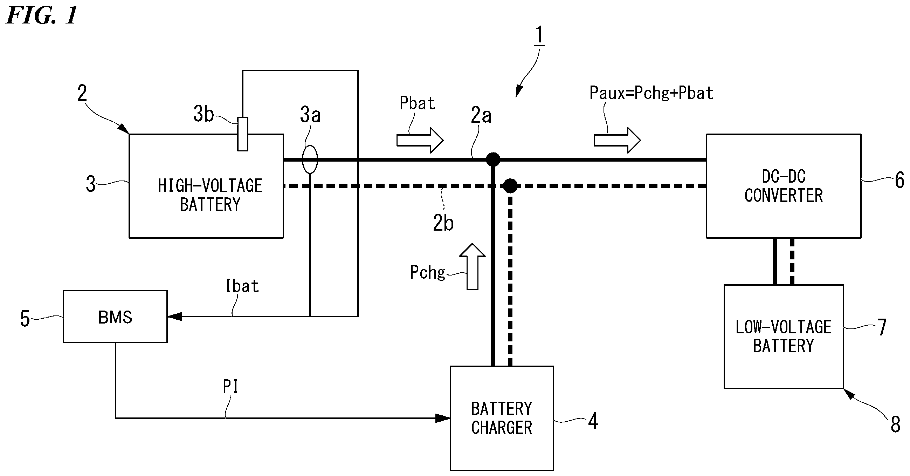

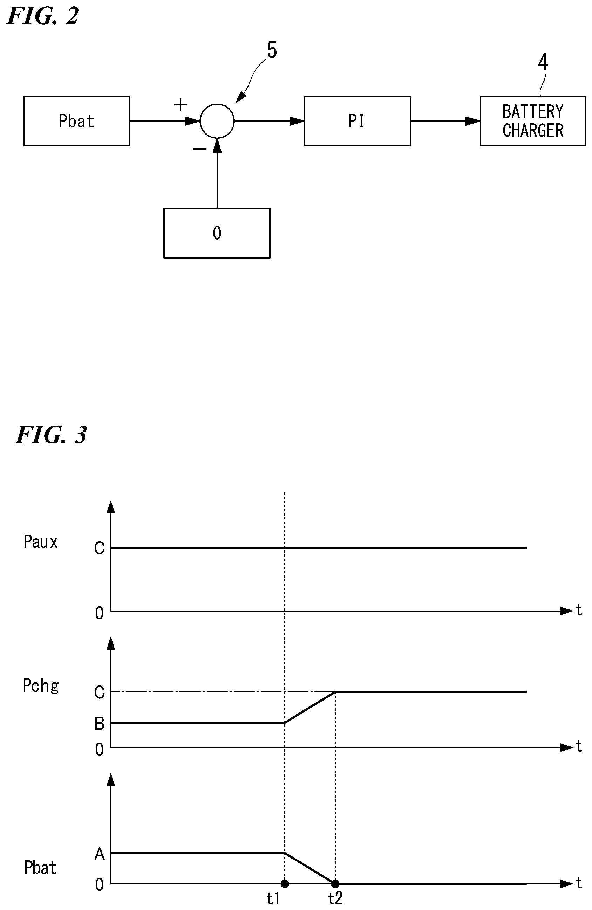

FIG. 1 is a view of a configuration of a charging control system 1 of an embodiment. FIG. 2 is a block diagram showing an image of calculation of a charging current command value PI in the charging control system 1.

As shown in FIG. 1, the charging control system 1 makes it possible to charge a high-voltage battery 3 mounted on a vehicle by connects a charging gun (not shown) that extends from an external electric power source (not shown) to an inlet (an example of a connection portion of the external electric power source, not shown) on a vehicle side. Examples of the vehicle include a pure electric vehicle including only a motor generator in a drive system or a hybrid electric vehicle including a motor generator and an engine (internal combustion engine) in a drive system.

The high-voltage battery 3 stores electric power supplied to the motor generator, which is a drive source of the vehicle. The term "high-voltage" means that the voltage is a higher voltage than 12 V for a vehicle auxiliary machine. The high-voltage battery 3 is connected via an inverter to a motor generator for traveling. The inverter is controlled by a travel control device (not shown). The inverter converts DC electric power of the high-voltage battery 3 into AC electric power and can supply the AC electric power to the motor generator. The motor generator performs power running by this electric power supply and accelerates the vehicle. The inverter can cause the motor generator to function as an electricity generator. The vehicle can be decelerated by this regeneration, and a generated AC current can be converted into a DC current and be stored in the high-voltage battery 3.

An external charging system 2 to which electric power is supplied from the external electric power source is connected to the high-voltage battery 3.

In the drawing, a line 2a represents a positive electrode electric power distribution line, and a line 2b represents a negative electrode electric power distribution line. For example, a current sensor 3a that acquires a value of a current that is output or input from the high-voltage battery 3 is provided on the positive electrode electric power distribution line 2a. The DC-DC converter (voltage converter) 6 may be simply referred to as a converter 6.

The external charging system 2 includes a battery charger 4 connected to the high-voltage battery 3 via the electric power distribution lines 2a, 2b. The charging gun is fitted and connected to an inlet (not shown), and thereby, the battery charger 4 is connected to the external electric power source. The battery charger 4 includes an AC-DC converter, converts AC electric power from the external electric power source into DC electric power, and can supply the DC electric power to the high-voltage battery 3 or the like. A diode (not shown) or the like for preventing electric power from flowing to the battery charger 4 side from an output destination (vehicle side) of the electric power is provided on the battery charger 4. In the drawing, reference numeral 3b represents a temperature sensor that detects the temperature of a lithium-ion battery (battery main body) in the high-voltage battery 3.

A low-voltage system 8 including a low-voltage battery 7 such as a 12V lead battery and a vehicle auxiliary machine (not shown) is connected to the high-voltage battery 3. The low voltage system 8 is connected to the high-voltage battery 3 and the external charging system 2 via the DC-DC converter 6. The DC-DC converter 6 can decrease the voltage of the electric power of the high-voltage battery 3 and the external charging system 2 and can supply the electric power to the low-voltage battery 7 and a load such as the vehicle auxiliary machine. The charging control system 1 includes a BMS (battery management system) 5 that is provided integrally with or separately from the high-voltage battery 3 and controls charging and discharging of the high-voltage battery 3 or the like.

When the charging gun is fitted and connected to the inlet, the charging control system 1 starts, and charging of the high-voltage battery 3 or the like is started. At this time, at least one of output electric power of the battery charger 4 and storage electric power of the high-voltage battery 3 is supplied to the low-voltage system 8 via the DC-DC converter 6.

By the electric power of at least one of the battery charger 4 and the high-voltage battery 3, the low-voltage battery 7 is charged, battery exhaustion of the low-voltage battery 7 is avoided, and electric power supply to the vehicle auxiliary machine (not shown) is performed.

Here, when the high-voltage battery 3 is a lithium-ion battery, charging or discharging at a low temperature (for example, 0°C) may be prohibited. This is because there is a possibility that, when charging or discharging the lithium-ion battery at a low temperature, degradation of the battery is accelerated. Therefore, under a low-temperature environment (a situation where the temperature of the high-voltage battery 3 is low), for example, a charging circuit (not shown) included in the high-voltage battery 3 may be cut off, and charging or discharging of the high-voltage battery 3 may be prohibited. Therefore, the charging control system 1 may maintain a charging-discharging standby state of the high-voltage battery 3 until prohibition of charging or discharging of the high-voltage battery 3 is released (for example, until the external temperature rises, and the temperature of the high-voltage battery 3 increases) (charging-discharging standby control).

On the other hand, the electric power of the low-voltage battery 7 is generally used as the electric power source for starting the system. In a state where the voltage of the low-voltage battery 7 does not have a voltage sufficient for starting the system such as a state where the vehicle is left unattended for a long period of time, the system cannot be started. In order to avoid this situation, it is desired to increase the voltage of the low-voltage battery 7 by supplying electric power from the high-voltage battery 3 to the low-voltage battery 7, but in the charging-discharging standby state of the high-voltage battery 3, since the output of the high-voltage battery 3 is restricted, electric power cannot be supplied from the high-voltage battery 3 to the low-voltage battery 7. Accordingly, under a low-temperature environment, there is a possibility that battery exhaustion of the low-voltage battery 7 occurs.

Therefore, in the charging control system 1 of the embodiment, the charging-discharging standby state of the high-voltage battery 3 is maintained while charging the low-voltage battery 7, and thereby, battery exhaustion of the low-voltage battery 7 is avoided. At this time, since charging of the high-voltage battery 3 at a low temperature is prohibited, the BMS 5 estimates consumption electric power (supply electric power to the low-voltage system 8) in an ON state of the converter 6, and the output of the battery charger 4 is controlled so that the battery charger 4 outputs electric power by an amount corresponding to the amount of the estimated consumption electric power. That is, the BMS 5 performs an output control of the battery charger 4 so that electric power is supplied from the battery charger 4 to the converter 6 by the amount corresponding to the amount of the consumption electric power of the vehicle auxiliary machine (including the low-voltage battery 7) connected to the converter 6.

With reference to FIG. 2, by calculating a charging current command value PI by which an output current of the high-voltage battery 3 becomes zero, the BMS 5 generates a state in which the output of the battery charger 4 and the auxiliary machine consumption electric power are balanced and reduces the output electric power of the high-voltage battery 3 to zero. The BMS 5 calculates the output electric power of the battery charger 4 so that a detection value of the current sensor 3a becomes zero and outputs the charging current command value PI to the battery charger 4 (a feedback control, a charging output control). The BMS 5 outputs a control signal of the battery charger 4 based on a current value of the high-voltage battery 3.

When the output electric power of the high-voltage battery 3 during a charging zero control described later is "Pbat", the output electric power of the battery charger 4 is "Pchg", and the auxiliary machine consumption electric power is "Paux", Equation 1 described below is established.

$$Paux = Pchg + Pbat \ldots \text{Equation 1}$$

The BMS 5 calculates a charging current command value PI that causes a current detection value (current value) Ibat of the high-voltage battery 3 to become zero, and transmits the charging current command value PI to the battery charger 4. At the time of Ibat = 0, Pbat = 0. At this time, Equation 1 described above becomes Paux = Pchg.

Accordingly, all of the amount of the consumption electric power of the vehicle auxiliary machine (including the low-voltage battery 7) is supplied from the battery charger 4, and as a result, the output electric power Pbat of the high-voltage battery 3 becomes zero.

FIG. 3 is a time chart showing time changes of Pchg, Pbat, and Paux described above in the charging control system 1.

As shown in FIG. 3, for example, it is assumed that the external electric power source is connected to the battery charger 4, for example, under a low-temperature environment (a situation where the temperature of the high-voltage battery 3 is low) where the external temperature is low at a time point of a time t0, and the temperature of the high-voltage battery 3 is equal to or less than a prescribed threshold value (for example, 0°C). At this time, for example, until a prescribed time t1, a control is performed in which the output electric power Pbat of the high-voltage battery 3 is set to a value A, the output electric power Pchg of the battery charger 4 is set to a value B, and the auxiliary machine consumption electric power Paux is set to a total value C of the values A, B. Then, at the prescribed time t1, the charging zero control that causes the charging current from the high-voltage battery 3 to the low-voltage battery 7 to be zero is turned on.

When the charging zero control is turned on, the output electric power Pchg of the battery charger 4 is gradually increased (increased from the value B to the value C) by the change of the charging current command value PI from the BMS 5. On the other hand, the output electric power Pbat of the high-voltage battery 3 is gradually decreased by the amount of the increase of the output electric power Pchg of the battery charger 4, and in due course, the output electric power Pbat of the high-voltage battery 3 is reduced from the value A to zero. The auxiliary machine consumption electric power Paux is maintained at the value C regardless of the temperature of the high-voltage battery 3. In this way, when the charging zero control is started, the output electric power Pchg of the battery charger 4 and the auxiliary machine consumption electric power Paux are balanced, and the output electric power Pbat of the high-voltage battery 3 becomes zero.

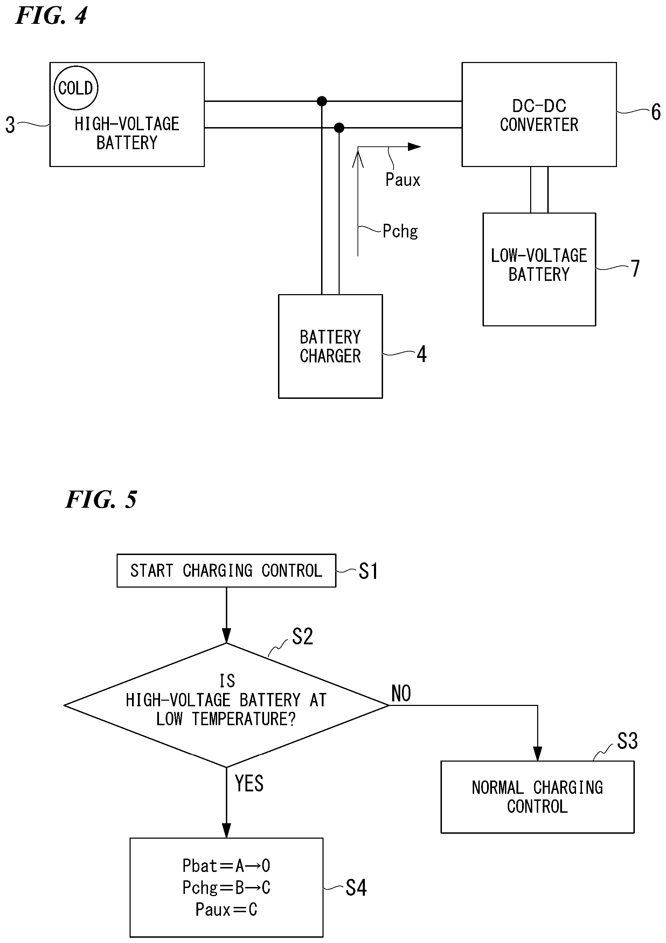

FIG. 4 is an explanatory view showing a flow of electric power when the low-voltage battery 7 is charged under a low-temperature environment in the charging control system 1 of the embodiment.

As shown in FIG. 4, the charging control system 1 of the embodiment has a configuration in which the battery charger 4 outputs electric power (output electric power Pchg) by the amount corresponding to the amount of the auxiliary machine consumption electric power Paux. The output electric power Pchg of the battery charger 4 is supplied as the auxiliary machine consumption electric power Paux directly to the converter 6. Thereby, the possibility of degradation of the high-voltage battery 3 and battery exhaustion of the low-voltage battery 7 due to discharging under a low-temperature environment is resolved.

In the charging control system 1 of the embodiment, when the battery charger 4 is connected under a low-temperature environment, the battery charger 4 outputs electric power by the amount of the auxiliary machine consumption electric power Paux, and the output electric power Pchg of the battery charger 4 and the auxiliary machine consumption electric power Paux are balanced. Thereby, compared to a configuration in which the converter 6 is provided in each of the low-voltage system 8 and the high-voltage system (external charging system 2), the low-voltage battery 7 can be charged by the output electric power Pchg of the battery charger 4 with a simple configuration in which an increase of the number of converters is prevented.

FIG. 5 is a flowchart showing a process in the BMS 5 when the charging control is performed by the charging control system 1 of the embodiment.

As shown in FIG. 5, when the charging gun is connected to the inlet of the vehicle, the BMS 5 starts the charging control of the high-voltage battery 3 and the like (Step S1). At this time, the BMS 5 measures the temperature of the high-voltage battery 3 and determines whether or not the high-voltage battery 3 is at a low temperature (whether or not the temperature is equal to or more than a threshold value) (Step S2).

When the high-voltage battery 3 is not at a low temperature (NO in Step S2), a normal charging control is performed (Step S3). In the normal charging control, the battery charger 4 supplies the electric power Pchg to the high-voltage battery 3 and the electric power converter 6. At this time, the electric power is not output from the high-voltage battery 3, and the electric power converter 6 decreases the voltage of the electric power output from the battery charger 4 and supplies the electric power to the low-voltage battery 7.

When the high-voltage battery 3 is at a low temperature (YES in Step S2), the output electric power Pbat of the high-voltage battery 3 is decreased from the value A to zero, the output electric power Pchg of the battery charger 4 is increased from the value B to a relatively large value C, and the auxiliary machine consumption electric power Paux is maintained at the value C (Step S4). Thereby, the output electric power Pchg of the battery charger 4 and the auxiliary machine consumption electric power Paux are balanced, and the output electric power Pbat of the high-voltage battery 3 is reduced.

As described above, the charging control system 1 in the embodiment described above includes: a voltage converter (DC-DC converter) 6 that is connected to a high-voltage battery 3, decreases the voltage of first electric power (output electric power) Pbat of the high-voltage battery 3, and supplies the electric power having a decreased voltage to a low-voltage battery 7; a battery charger 4 that is connected to the converter 6 and the high-voltage battery 3, and supplies second electric power (output electric power) Pchg obtained from an external electric power source to at least one of the converter 6 and the high-voltage battery 3; a current detection portion (current sensor 3a) that acquires a current value Ibat of the first electric power Pbat flowing from the high-voltage battery 3 to the converter 6; and a control portion (BMS) 5 that inputs a signal of the current sensor 3a and outputs a command value PI of the second electric power Pchg which is output from the battery charger 4 to the battery charger 4, wherein the BMS 5 outputs the command value PI of the second electric power Pchg based on the current value Ibat.

According to this configuration, the control portion (BMS 5) that controls the output electric power Pchg of the battery charger 4 outputs an electric power command value PI to the battery charger 4 based on the current value Ibat of the output electric power Pbat flowing from the high-voltage battery 3 to the converter 6. The output electric power Pbat of the high-voltage battery 3 is reduced by balancing the output electric power Pchg of the battery charger 4 and an auxiliary machine consumption electric power Paux. Accordingly, as compared with a configuration in which a converter is provided between the battery charger 4 and the low-voltage battery 7 and between the high-voltage battery 3 and the low-voltage battery 7, the low-voltage battery 7 can be charged by the output electric power Pchg of the battery charger 4 without the intermediary of the high-voltage battery 3 while preventing the increase of the number of converters.

Further, in the charging control system 1 described above, the BMS 5 outputs the command value PI of the second electric power Pchg of the battery charger 4 so that the current value Ibat of the first electric power Pbat flowing from the high-voltage battery 3 to the converter 6 becomes zero.

According to this configuration, the BMS 5 that controls the output electric power Pchg of the battery charger 4 outputs the electric power command value PI to the battery charger 4 so that the current value Ibat flowing from the high-voltage battery 3 to the converter 6 becomes zero, and thereby, the low-voltage battery 7 can be charged from the battery charger 4 without the intermediary of the high-voltage battery 3 while reducing the output electric power Pbat of the high-voltage battery 3 to zero.

Further, the charging control system 1 described above includes: a temperature acquisition portion (temperature sensor) 3b that acquires a temperature of the high-voltage battery 3, wherein the BMS 5 outputs the command value PI of the second electric power Pchg based on the current value Ibat when the temperature of the high-voltage battery 3 acquired by the temperature sensor 3b becomes equal to or less than a threshold value.

According to this configuration, the BMS 5 that controls the output electric power Pchg of the battery charger 4 outputs the electric power command value PI to the battery charger 4 based on the temperature of the high-voltage battery 3, and thereby, for example, when the temperature of the high-voltage battery 3 is decreased (when the battery is at a low temperature), the output electric power Pbat of the high-voltage battery 3 is reduced, and it becomes possible to charge the low-voltage battery 7 by the output electric power Pchg of the battery charger 4. Therefore, it is possible to continue electric power supply to the low-voltage battery 7 by the battery charger 4 while preventing degradation of the high-voltage battery 3.

Further, in the charging control system 1 described above, the BMS 5 outputs the command value PI

of the second electric power Pchg so that the second electric power Pchg output from the battery charger 4 is equal to electric power (Paux) consumed by the converter 6.

According to this configuration, the output electric power Pbat of the high-voltage battery 3 can be made zero, and therefore, it is possible to charge the low-voltage battery 7 from the battery charger 4 without the intermediary of the high-voltage battery 3.

Further, in the charging control system 1 described above, the BMS 5 causes the current value Ibat of the first electric power Pbat to be zero by increasing a current value output from the battery charger 4.

According to this configuration, the output electric power Pbat of the high-voltage battery 3 can be made zero by adjusting only the current value Ibat output from the battery charger 4.

The present invention is not limited to the embodiment described above, and various changes can be made without departing from the scope of the present invention such as replacing the components of the embodiment with well-known components.

For example, the charging control system of the present embodiment is described using an example applied to an electric vehicle but may be applied to a two-wheeled or three-wheeled saddle riding vehicle or the like on which a driver rides by straddling a vehicle body. The application of the present invention is not limited to vehicles, and the present invention may be applied to various vehicles and movable bodies such as various transport apparatuses such as aircraft or ships, construction machinery, and industrial machinery. Further, the present invention is broadly applicable also to equipment other than vehicles such as, for example, a push lawn mower and a cleaning machine.

A charging control system (1) includes: a DC-DC converter (6) that is connected to a high-voltage battery (3), decreases the voltage of first electric power (Pbat) of the high-voltage battery (3), and supplies the electric power to a low-voltage battery (7); a battery charger (4) that is connected to the converter (6) and the high-voltage battery (3), and supplies second electric power (Pchg) obtained from an external electric power source to at least one of the converter (6) and the high-voltage battery (3); a current sensor (3a) that acquires a current value (Ibat) of the first electric power (Pbat) flowing from the high-voltage battery (3) to the converter (6); and a BMS (5) that inputs a signal of the current sensor (3a) and outputs a command value (PI) of the second electric power (Pchg) which is output from the battery charger (4) to the battery charger (4), wherein the BMS (5) outputs the command value (PI) of the second electric power (Pchg) based on the current value (Ibat).

**Claims**

**1.** A charging control system (1) comprising:

a voltage converter (6) that is connected to a high-voltage battery (3), decreases a voltage of first electric power (Pbat) of the high-voltage battery (3), and supplies the electric power having a decreased voltage to a low-voltage battery (7);
a battery charger (4) that is connected to the voltage converter (6) and the high-voltage battery (3), and supplies second electric power (Pchg) obtained from an external electric power source to at least one of the voltage converter (6) and the high-voltage battery (3);
a current detection portion (3a) that acquires a current value (Ibat) of the first electric power (Pbat) flowing from the high-voltage battery (3) to the voltage converter (6); and
a control portion (5) that inputs a signal of the current detection portion (3a) and outputs a command value (PI) of the second electric power (Pchg) which is output from the battery charger (4) to the battery charger (4),
wherein the control portion (5) outputs the command value (PI) of the second electric power (Pchg) based on the current value (Ibat).

**2.** The charging control system according to claim 1, wherein the control portion (5) outputs the command value (PI) of the second electric power (Pchg) of the battery charger (4) so that the current value (Ibat) of the first electric power (Pbat) flowing from the high-voltage battery (3) to the voltage converter (6) becomes zero.

**3.** The charging control system according to claim 1 or 2, comprising:

a temperature acquisition portion (3b) that acquires a temperature of the high-voltage battery (3),
wherein the control portion (5) outputs the command value (PI) of the second electric power (Pchg) based on the current value (Ibat) when the temperature of the high-voltage battery (3) acquired by the temperature acquisition portion (3b) becomes equal to or less than a threshold value.

**4.** The charging control system according to claim 3, wherein the control portion (5) outputs the command value (PI) of the second electric power (Pchg) so that the second electric power (Pchg) output from the battery charger (4) is equal to electric power consumed by the voltage converter (6).

**5.** The charging control system according to claim 3, wherein the control portion (5) causes the current value (Ibat) of the first electric power (Pbat) to be zero by increasing a current value output from the battery

charger (4).

*FIG. 1*

## FIG. 2

## FIG. 3

## FIG. 4

## FIG. 5

Europäisches
Patentamt

European
Patent Office

Office européen
des brevets

## EUROPEAN SEARCH REPORT

**Application Number**

EP 25 20 1092

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/363559 A1 (MITSUTANI NORITAKE [JP]) 28 November 2019 (2019-11-28) * paragraphs [0006], [0023], [0028], [0037], [0038] * * figure 1 * ----- | 1-5 | INV. B60L58/20 B60L58/25 H02J7/34 ADD. H02J7/06 |

**TECHNICAL FIELDS SEARCHED (IPC)**

B60L

The present search report has been drawn up for all claims

| Place of search | Date of completion of the search | Examiner |
|---|---|---|
| Munich | 14 January 2026 | Bocanegra Gallardo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 1092

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2026

| Patent document cited in search report | Publication date | Patent family member(s) | | Publication date |
|---|---|---|---|---|
| US 2019363559 A1 | 28-11-2019 | CN | 110525268 A | 03-12-2019 |
| | | EP | 3572273 A1 | 27-11-2019 |
| | | JP | 2019205276 A | 28-11-2019 |
| | | US | 2019363559 A1 | 28-11-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6535583 B